# FASCICULE DE BREVET EUROPEEN

(11) **EP 0 784 762 B1**
(45) Date de publication et mention de la délivrance du brevet: **10.02.1999**
(21) Numéro de dépôt: 95931269.5
(22) Date de dépôt: 20.09.1995
(51) Int. Cl.: F16D 66/02, F16D 65/097, F16D 65/092

(54) **ENSEMBLE D'UN ELEMENT DE FRICTION, D'UN RESSORT ET D'UN INDICATEUR D'USURE POUR FREIN A DISQUE DE VEHICULE AUTOMOBILE**
REIBBELAG, FEDER UND VERSCHLEISSANZEIGER FÜR EINE KRAFTFAHRZEUGSCHEIBENBREMSE
ASSEMBLY COMPRISING A FRICTION ELEMENT, A SPRING AND A WEAR INDICATOR FOR VEHICLE DISC BRAKES

(30) Priorité: 13.10.1994 FR 9412183
(43) Date de publication de la demande: 23.07.1997
(73) Titulaire: Bosch Systemes de Freinage, 93700 Drancy (FR)
(72) Inventeur: LE DEIT, Gérard, F-77181 Courtry (FR); GERARD, Jean-Louis, F-93170 Bagnolet (FR)
(74) Mandataire: Bentz, Jean-Paul
(86) Numéro de dépôt international: FR9501207
(87) Numéro de publication internationale: WO9612120

(56) Documents cités:
- EP-A- 0 594 514
- DE-A- 3 508 066
- FR-A- 2 433 676

## Description

La présente invention a pour objet les éléments de friction, équipés de ressorts et d'indicateurs d'usure, en particulier destinés à être installés sur des freins à disque pour véhicules automobiles.

De tels éléments de friction comportent de façon connue une plaque support reçue en ancrage et coulissement dans un organe support de couple du frein à disque, et une garniture de friction est fixée sur une partie de la surface d'une première face de la plaque support pour entrer en contact de friction avec un disque tournant lorsqu'une force est appliquée sur une deuxième face de la plaque support opposée à la première face. De façon habituelle, un ressort anti-bruit est associé à l'élément de friction, de même qu'un dispositif indicateur d'usure de la garniture de friction, avertissant le conducteur du véhicule par un signal, en général lumineux, que la garniture de friction a atteint, du fait de son usure, une épaisseur prédéterminée et doit être remplacée.

De très nombreux documents illustrent ce type d'éléments de friction, comme US-A-4 056 174, FR-A-2 433 676 ou FR-A-2 567 601. Selon ce dernier document, correspondant au préambule de la revendication principale, une ouverture traversante est formée dans la plaque support pour la fixation d'une partie hélicoïdale du ressort anti-bruit, formée d'au moins une spire, et d'une partie de montage d'un indicateur d'usure de la garniture de friction traversant la partie hélicoïdale du ressort.

Une telle conception présente toutefois des inconvénients. En premier lieu, une découpe doit être formée dans la garniture de friction pour loger l'indicateur d'usure. Il s'ensuit que la surface de friction avec le disque tournant se trouve réduite d'autant, ainsi que l'efficacité du frein à disque ainsi équipé. De plus, le ressort comporte deux spires logées respectivement dans deux logements en forme de U, pratiqués dans la plaque support et séparés par une projection de celle-ci. Pour procurer une fixation à l'indicateur d'usure de la garniture de friction, cette projection comporte une ouverture de façon à former un anneau fermé autour d'un alésage.

Le bord circonférenciel de la projection comporte un évidement en forme de U pour guider la partie du ressort faisant la liaison entre les deux spires situées de part et d'autre de la projection. Une portion de maintien de l'indicateur d'usure s'étend à travers une des spires et comporte une gorge munie d'un jonc venant en butée sur un épaulement formé dans l'alésage de la projection.

Cette conception implique donc une forme relativement complexe, et donc coûteuse, de la plaque support, et en particulier de la projection servant à la fixation du ressort et de l'indicateur d'usure. De plus, le ressort n'est maintenu sur la plaque support que lorsque la partie de montage de l'indicateur d'usure est elle-même à sa place dans l'ouverture de la projection, d'où un risque de perte du ressort lors des opérations d'assemblage de l'élément de friction, ce risque étant aggravé par le fait qu'il est possible de monter l'indicateur d'usure sur la plaque support sans avoir monté au préalable le ressort.

La présente invention a donc pour objet de proposer un élément de friction pour frein à disque, du type rappelé plus haut, dont la plaque support soit de fabrication simple, dans lequel le ressort anti-bruit et l'indicateur d'usure puissent se monter facilement et rester fixés de façon fiable, l'indicateur d'usure donnant par ailleurs un signal d'avertissement lorsque l'épaisseur de la garniture de friction a atteint, du fait de son usure, une valeur prédéterminée.

Ce but est atteint, selon la présente invention, en prévoyant que le ressort comporte des parties d'extrémités situées de part et d'autre de la plaque support, la partie hélicoïdale du ressort étant reçue dans l'ouverture de la plaque support, et la partie de montage de l'indicateur d'usure étant formée avec un filetage coopérant avec la partie hélicoïdale du ressort.

Le ressort anti-bruit est ainsi fixé sur la plaque support, l'indicateur d'usure est fixé sur le ressort par vissage et le verrouille en place, de sorte qu'il est impossible de monter l'indicateur d'usure sur la plaque support sans avoir monté au préalable le ressort.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue en coupe d'une extrémité d'un élément de friction selon la présente invention, muni d'un ressort anti-bruit et d'un indicateur d'usure;
- la Figure 2 représente une vue en coupe d'une extrémité d'un élément de friction selon la présente invention, muni seulement d'un ressort anti-bruit;
- la Figure 3 représente une vue partielle en perspective du montage représenté sur la Figure 2;
- la Figure 4 représente une vue en coupe partielle d'un indicateur d'usure destiné à équiper l'élément de friction représenté sur la Figure 2;
- la Figure 5 représente une vue en perspective de l'indicateur d'usure de la Figure 4;
- la Figure 6 représente une demi-vue d'un élément de friction selon l'invention reçu dans un organe support de couple d'un frein à disque;
- la Figure 7 représente en coupe un frein à disque selon la ligne X-X de la Figure 6, et
- la Figure 8 représente une vue partielle en perspective d'une extrémité d'un élément de friction selon la présente invention.

Sur les différentes Figures, les mêmes éléments sont repérés par les mêmes numéros de référence.

On a représenté sur les Figures un ensemble formé d'un élément de friction, désigné dans son ensemble par la référence A, et d'un ressort, désigné dans son ensemble par la référence B, et destiné à coopérer avec un indicateur d'usure désigné dans son ensemble par la référence C.

L'élément de friction A comporte une plaque support 10 à laquelle est associé par tout moyen approprié tel que par exemple collage ou rivetage, un bloc de garniture de friction 12.

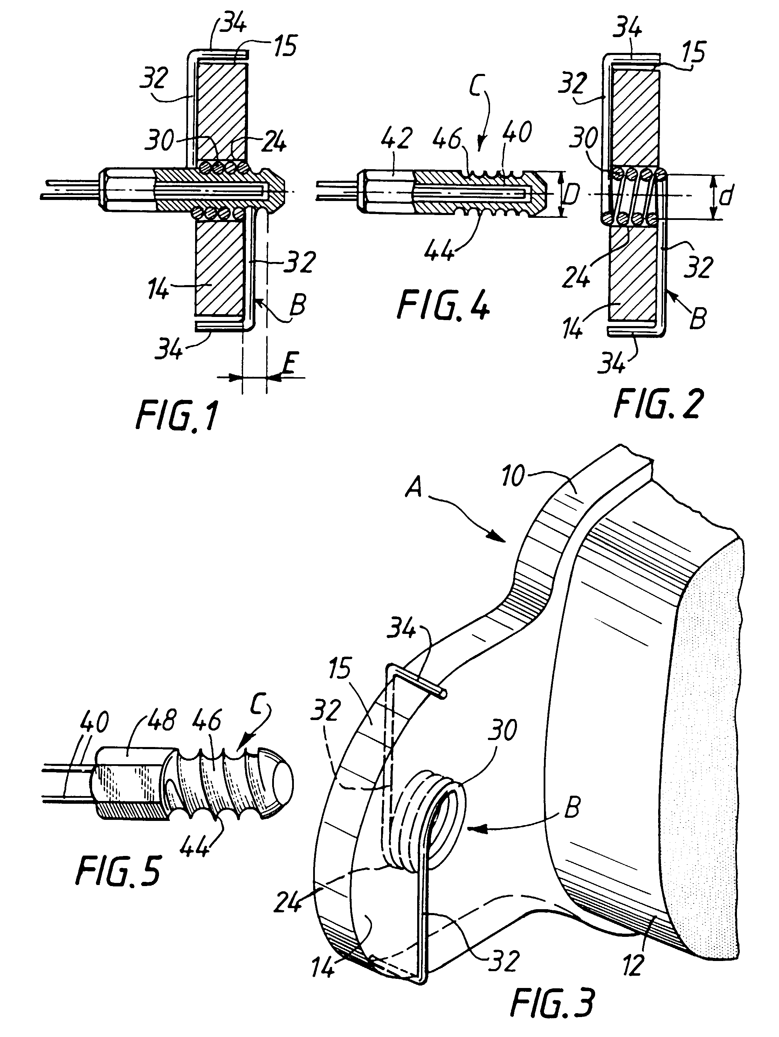

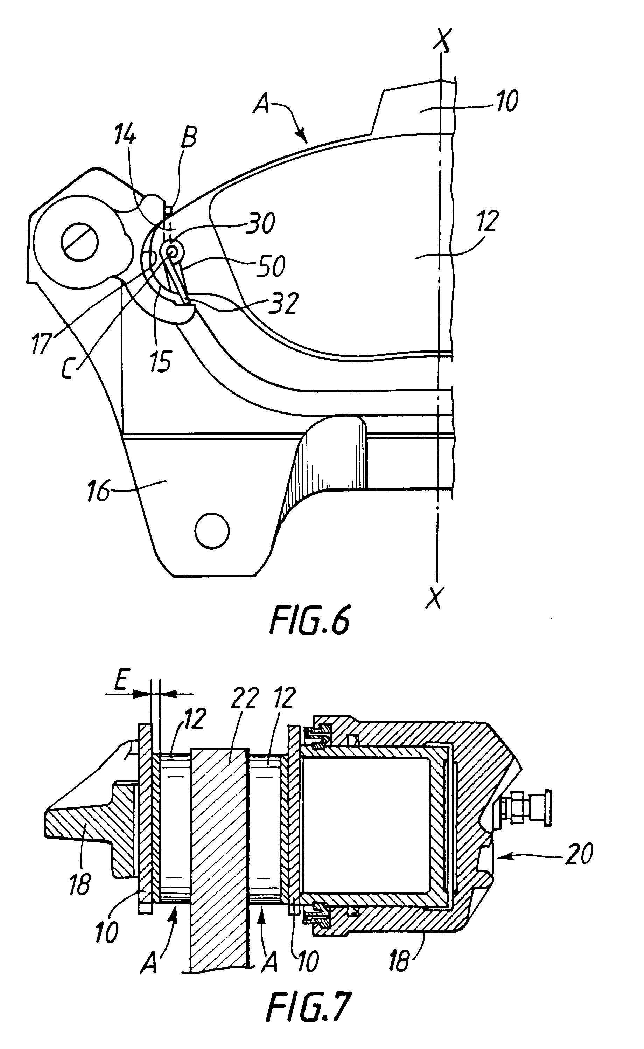

De façon connue, par exemple du document EP-B-0 002 399, la plaque support 10 est formée avec des extrémités circonférentielles, constituées de prolongements dépourvus de garniture de friction et terminés par des surfaces arrondies convexes, une seule extrémité 14 ayant été représentée sur les Figures 3 et 6.

Comme on le voit mieux sur les Figures 6 et 7, l'élément de friction A est destiné à équiper un frein à disque comprenant un organe fixe support de couple 16 prévu pour être associé à une partie fixe du véhicule. Un étrier 18 est monté coulissant sur l'organe support de couple 16 et comporte un moteur de frein 20, un piston mû par une pression hydraulique dans l'exemple représenté, pour appliquer sur la face de la plaque support dépourvue de garniture de friction une force en direction d'un disque de frein 22 prévu pour être associé à une partie tournant avec une des roues du véhicule.

Les extrémités 14 de l'élément de friction A sont reçues en ancrage et coulissement dans des logements de forme complémentaire 17 ménagés dans l'organe support de couple 16. Au moins une des extrémités 14 est formée avec une ouverture traversante 24 (Figures 1,2 et 3), et de préférence chaque extrémité 14 est formée avec une telle ouverture 24 pour assurer la symétrie entre l'élément de friction intérieur (situé du côté du moteur de frein 20) et l'élément de friction extérieur lors de leur fabrication, et donc pour en réduire le coût.

Le ressort B, en fil métallique, est associé à l'élément de friction A de façon à solliciter ce dernier circonférentiellement dans l'organe support de couple 16 et remplir ainsi d'une part la fonction de ressort anti-bruit, et d'autre part la fonction décrite dans le document EP-B-0 002 399 précité, à savoir obliger la surface arrondie convexe 15 de l'extrémité 14 de l'élément de friction à se déplacer le long de la surface concave 17 en vis à vis définie sur l'organe support de couple 16 lors de chaque action de freinage.

De façon plus précise, le ressort B comporte une partie médiane 30 formée d'au moins une spire hélicoïdale, circulaire dans l'exemple représenté, destinée à être reçue avec un faible jeu dans l'ouverture 24 de l'extrémité 14, la spire ou chaque spire terminale de la partie médiane se prolongeant en deux parties d'extrémités rectilignes 32, symétriques par rapport à la partie médiane 30, et s'étendant sensiblement parallèlement l'une à l'autre dans un plan tangent à la spire ou aux spires de la partie médiane.

Lorsque le ressort B est en place dans l'ouverture 24 de l'élément de friction A, les parties d'extrémités 32 sont situées de part et d'autre de la plaque support 10, et s'étendent parallèlement aux faces de celle-ci et à leur voisinage immédiat, comme on le voit bien sur les Figures 2 et 3. La partie hélicoïdale 30 du ressort est donc positionnée de façon précise dans la plaque support 10. De préférence, la partie médiane 30 du ressort comporte, dans cette position de repos (où le ressort B est en place sur l'élément de friction A, et où l'élément de friction n'est pas encore équipé de l'indicateur d'usure C et n'est pas encore en place dans l'organe support de couple) et en fonction du diamètre du fil constituant le ressort, des spires jointives en nombre tel que l'empilement de ces spires ait une épaisseur axiale sensiblement égale à l'épaisseur de la plaque support 10.

De façon avantageuse, les parties d'extrémités 32 sont formées avec des parties terminales 34 repliées sensiblement à angle droit, les parties terminales 34 ayant une longueur approximativement égale à l'épaisseur de la plaque support 10, et étant situées à proximité immédiate de la surface périphérique extérieure 15 de l'extrémité 14, comme on le voit bien sur les Figures 1 et 2.

L'indicateur d'usure C est formé d'un conducteur électrique 40, simple ou de préférence en boucle, noyé dans un corps 42, par exemple en matériau thermoplastique, de sorte que son extrémité soit située à une certaine distance de l'extrémité du corps 42. Le corps 42 comporte une partie de montage 46 pour la fixation de l'indicateur d'usure sur l'élément de friction, et une partie de manoeuvre 48, par exemple en forme d'écrou à six pans, pour faciliter sa manipulation.

Conformément à la présente invention, la partie de montage 46 de l'indicateur d'usure C est formée avec un filetage 44, destiné à coopérer avec la partie hélicoïdale médiane 30 du ressort B, et plus précisément avec la sorte de taraudage formé par la ou les spires constituant cette partie hélicoïdale 30.

On aura compris facilement à la lecture de ce qui précède comment la présente invention est mise en oeuvre. Après que l'élément de friction A ait été fabriqué, c'est à dire après que la garniture de friction 12 ait été solidarisée à une des faces de la plaque support 10, ou avant que l'élément de friction A ne soit utilisé, on assemble le ressort B sur l'élément de friction A. Pour ce faire, l'une des parties d'extrémités 32 est introduite dans l'ouverture 24, puis un effort est exercé sur le ressort B pour y faire pénétrer la partie 30, une déformation temporaire de cette partie 30, obtenue grâce à l'élasticité du ressort, facilitant cette opération.

Une fois le ressort B ainsi monté sur l'extrémité 14, l'indicateur d'usure C peut à son tour être installé sur cet ensemble. Il suffit simplement pour cela de manipuler la partie de manoeuvre 48 pour visser la partie de montage 46 dans la partie hélicoïdale 30 du ressort à partir de la face de la plaque support dépourvue de garniture de friction. Les caractéristiques du filetage de la partie de montage 46 pourront être choisies de façon à ce que cette partie 46 coopère de façon conventionnelle avec la partie hélicoïdale 30 du ressort B, dont on aura compris que la partie interne joue le rôle d'un taraudage conventionnel.

En particulier, la longueur du filetage de la partie 46 sera telle que, lorsque l'indicateur d'usure C est vissé à fond dans le ressort B, dont la position dans la plaque support 10 est parfaitement déterminée, l'extrémité du fil ou de la boucle 40 soit située à une distance E (Figure 1) de la face de la plaque support 10 correspondant à l'épaisseur minimale E (Figure 7) de la garniture de friction 12 pour laquelle on désire que soit émis le signal d'avertissement pour le conducteur du véhicule.

On obtient donc bien, grâce à l'invention, un montage particulièrement simple de l'indicateur d'usure C sur la plaque support de l'élément de friction A, par l'intermédiaire du ressort B. L'invention permet cependant d'obtenir comme avantage supplémentaire que le ressort B et l'indicateur d'usure C restent fixés sur l'élément de friction A de façon particulièrement fiable.

Conformément à la présente invention, on peut avantageusement prévoir que le diamètre D de la partie de montage 46 de l'indicateur d'usure C soit légèrement supérieur au diamètre interne d de la partie hélicoïdale du ressort B considéré au repos, c'est à dire avant assemblage avec l'indicateur d'usure C. Ces diamètres sont mesurés de façon conventionnelle comme pour des filets de vis et des taraudages classiques, c'est à dire que le diamètre D de la partie de montage 46 est celui d'un cylindre fictif contenant la ligne hélicoïdale circulaire formée par les sommets des filets du filetage 44, comme indiqué sur la Figure 4, et que le diamètre d de la partie hélicoïdale 30 du ressort B est celui d'un cylindre fictif contenant la ligne hélicoïdale circulaire formée par la ligne de contact entre les spires jointives, comme indiqué sur la Figure 2.

De la sorte, lorsque la partie de montage 46 est vissée dans la partie hélicoïdale 30, elle tend à agrandir le diamètre de cette dernière. Il sera donc nécessaire d'exercer sur la partie de manoeuvre 48 un couple assez important pour effectuer ce vissage, de sorte que l'indicateur d'usure C restera fixé dans le ressort B, quelles que soient les conditions d'utilisation et les vibrations engendrées par le fonctionnement du frein à disque et qui auraient tendance à faire se dévisser l'indicateur d'usure.

On pourra également avantageusement prévoir, de façon alternative ou additionnelle, que le pas du filetage de la partie de montage 46 soit différent du pas du taraudage constitué par les spires de la partie hélicoïdale 30 du ressort B, et de préférence supérieur.

De façon analogue à celle qui a été décrite ci-dessus, lorsque la partie de montage 46 est vissée dans la partie hélicoïdale 30, elle tend à espacer axialement les spires constituant cette dernière, et qui étaient jointives au repos. Il sera donc nécessaire d'exercer sur la partie de manoeuvre 48 un couple assez important pour effectuer ce vissage, de sorte que l'indicateur d'usure C restera fixé dans le ressort B, quelles que soient les conditions d'utilisation et les vibrations engendrées par le fonctionnement du frein à disque qui pourraient résulter en un dévissage spontané de l'indicateur d'usure.

On notera que, lors du vissage de l'indicateur d'usure C dans le ressort B, si la partie d'extrémité 32 située du côté de la plaque support 10 portant la garniture de friction 12 est maintenue fixe alors que l'autre partie d'extrémité 32 reste libre, les frottements du filetage 44 sur les spires du ressort B ont pour résultat d'"ouvrir" ces spires, ce qui facilite l'opération de vissage, alors que, dans les mêmes conditions, les frottements créés lors d'un dévissage ont pour résultat de "resserrer" ces spires. Il en résulte donc que l'opération de dévissage nécessite l'application d'un couple beaucoup plus important que pour l'opération de vissage, que le dévissage soit intentionnel ou spontané.

On pourra donc prévoir sur la face de la plaque support 10 munie de la garniture de friction 12 une butée pour limiter le débattement angulaire de la partie d'extrémité 32 autour de l'axe de l'ouverture 24 lors du vissage de l'indicateur d'usure, l'autre partie d'extrémité 32 située de l'autre côté de la plaque support restant libre en rotation autour du même axe, et/ou une autre butée pour limiter le débattement angulaire de la partie d'extrémité 32 autour de cet axe lors du dévissage de l'indicateur d'usure, l'autre partie d'extrémité 32 située de l'autre côté de la plaque support restant libre en rotation.

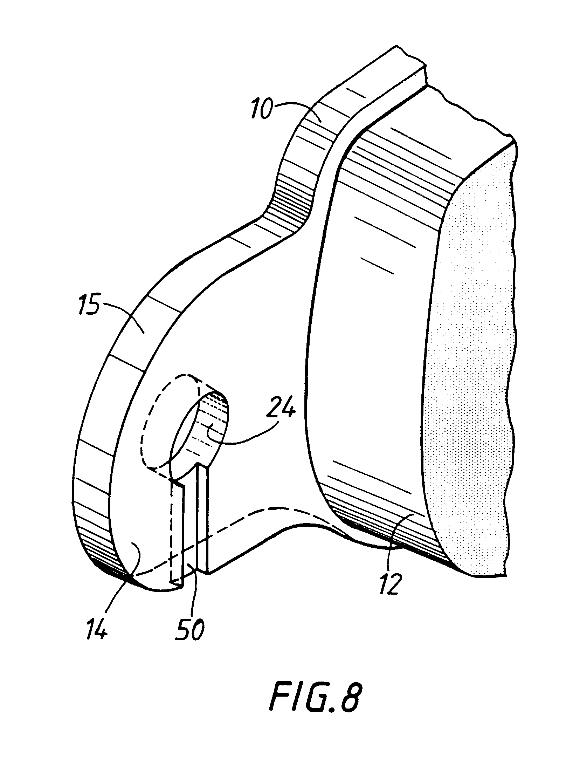

Chacune de ces deux butées pourra être formée par un pion venu de matière avec la plaque support ou inséré à force dans un alésage de la plaque support. Dans le cas où l'on désire équiper la plaque support de deux butées pour le vissage et le dévissage, celles-ci pourront avantageusement être formées simplement par les flancs d'une gorge 50 de section rectangulaire, dont la profondeur est voisine du diamètre du fil constituant le ressort B, creusée sur la face de la plaque support portant la garniture de friction, et s'étendant entre l'ouverture 24 et la surface arrondie convexe 15, comme on l'a représenté sur la Figure 8.

Dans ce dernier cas, la partie médiane 30 du ressort comporte, au repos, et en fonction du diamètre du fil constituant le ressort, des spires jointives en nombre tel que l'empilement de ces spires ait une épaisseur axiale sensiblement égale à l'épaisseur de la plaque support 10 diminuée de la profondeur de la gorge 50.

La largeur de la gorge 50, sans être critique, sera choisie de telle manière qu'elle permette au ressort B de remplir toutes ses fonctions lors d'une action de freinage, c'est à dire qu'elle permette un certain débattement angulaire et une certaine déformation de la partie d'extrémité 32 reçue dans la gorge 50 lorsque l'élément de friction A, équipé du ressort B et de l'indicateur d'usure C est en place dans le frein à disque, comme on l'a représenté sur la Figure 6.

De plus, comme on peut le voir sur la Figure 6, les parties d'extrémités 32 du ressort B prolongent la partie hélicoïdale 30 du côté de la partie hélicoïdale le plus éloigné de la garniture de friction 12, c'est à dire le plus proche de l'organe support de couple 16. Ainsi, lorsque l'élément de friction totalement équipé est installé dans l'organe support de couple 16, une contrainte est exercée sur chacune des parties d'extrémités 32 dans le sens d'un resserrement des spires de la partie hélicoïdale 30 du ressort. Il en résulte alors que la fixation de l'indicateur d'usure C dans le ressort B s'en trouve assurée avec encore plus de fiabilité, et que le dévissage spontané de l'indicateur d'usure C est encore plus difficile, sinon impossible.

On voit donc bien qu'on a réalisé un élément de friction pour un frein à disque qui répond au problème que s'était posé l'invention. En effet, la fabrication de la plaque support 10 ne pose pas de difficultés particulières puisqu'elle ne nécessite que la formation d'une ouverture traversante 24, et éventuellement d'une gorge 50, dont les tolérances peuvent être assez larges. Elle est donc très peu onéreuse.

Le ressort B, lui-même de fabrication simple, est fixé dans l'ouverture 24 simplement, et ne peut en être extrait que lors d'une manoeuvre volontaire. Sa position axiale par rapport à la plaque support 10 est parfaitement définie par ses parties d'extrémités 32 enserrant la plaque support 10, qu'une gorge 50 ait été prévue ou non.

L'indicateur d'usure C est lui-même fixé de façon simple, par vissage, dans le ressort B, et adopte automatiquement sa position optimale, quant à sa fonction d'avertisseur, lorsqu'il y est vissé à fond. De plus, il n'est pas possible de monter l'indicateur d'usure C sur la plaque support 10 sans y avoir installé au préalable le ressort B. Enfin, le dévissage de l'indicateur d'usure C est notablement plus difficile que son vissage, et même pratiquement impossible lorsque l'élément de friction est en place dans le frein à disque. La fixation de l'indicateur d'usure s'avère donc particulièrement fiable.

Bien entendu, l'invention n'est pas limitée aux modes de réalisation qui ont été décrits, mais elle est susceptible au contraire de recevoir de nombreuses modifications qui apparaîtront à l'homme du métier et qui rentrent dans le cadre des revendications annexées. C'est ainsi par exemple qu'on pourra prévoir que les spires formant la partie hélicoïdale du ressort B ne soient pas jointives au repos, et que le pas du filetage 44 de la partie de montage de l'indicateur d'usure C soit inférieur au pas de ces spires au repos.

## Revendications

1. Ensemble d'un élément de friction (A), d'un ressort (B) et d'un indicateur d'usure (C) pour frein à disque de véhicule automobile, l'élément de friction (A) comportant une plaque support (10) reçue en ancrage et coulissement dans un organe support de couple (16) du frein à disque, une garniture de friction (12) étant fixée sur une partie de la surface d'une première face de la plaque support (10) pour entrer en contact de friction avec un disque tournant (22) lorsqu'une force est appliquée sur une deuxième face de la plaque support (10) opposée à la première face, une ouverture traversante (24) étant formée dans la plaque support (10) pour la fixation d'une partie hélicoïdale (30) du ressort (B) formée d'au moins une spire de fil métallique et d'une partie de montage (46) de l'indicateur d'usure (C) de la garniture de friction (12) traversant la partie hélicoïdale (30) du ressort (B), caractérisé en ce que le ressort (B) comporte des parties d'extrémités (32,34) situées de part et d'autre de la plaque support (10), la partie hélicoïdale (30) du ressort (B) étant reçue dans l'ouverture (24) de la plaque support (10), et la partie de montage (46) de l'indicateur d'usure (C) étant formée avec un filetage coopérant avec la partie hélicoïdale (30) du ressort (B).

2. Ensemble selon la revendication 1, caractérisé en ce que le diamètre (D) de la partie de montage (46) de l'indicateur d'usure (C) est au moins égal au diamètre (d) de la partie hélicoïdale (30) du ressort (B).

3. Ensemble selon la revendication 2, caractérisé en ce que le pas du filetage (44) de la partie de montage (46) de l'indicateur d'usure (C) est différent du pas des spires de la partie hélicoïdale (30) du ressort (B).

4. Ensemble selon la revendication 3, caractérisé en ce que le pas du filetage de la partie de montage (46) de l'indicateur d'usure (C) est inférieur au pas des spires de la partie hélicoïdale (30) du ressort (B).

5. Ensemble selon la revendication 3, caractérisé en ce que les spires de la partie hélicoïdale (30) du ressort (B) sont jointives au repos, et en ce que le pas du filetage (44) de la partie de montage (46) de l'indicateur d'usure (C) est supérieur au pas des spires de la partie hélicoïdale (30) du ressort (B).

6. Ensemble selon l'une quelconque des revendications 4 ou 5, caractérisé en ce que la partie hélicoïdale (30) du ressort (B) est prolongée par deux parties d'extrémités rectilignes (32), s'étendant parallèlement aux première et deuxième faces de la plaque support (10) et à leur voisinage immédiat.

7. Ensemble selon la revendication 6, caractérisé en ce que la première face de la plaque support (10) comporte au moins une butée pour limiter le débattement angulaire de la partie d'extrémité (32) du ressort (B) située au voisinage de cette première face.

8. Ensemble selon la revendication 7, caractérisé en ce que la première face de la plaque support (10) comporte une gorge (50) de section rectangulaire et de profondeur voisine du diamètre du fil métallique constituant le ressort (B), et dont les flancs forment deux butées pour limiter le débattement angulaire de la partie d'extrémité (32) du ressort (B) située au voisinage de cette première face.

9. Ensemble selon l'une des revendications précédentes, caractérisé en ce que les parties d'extrémités (32) du ressort (B) prolongent la partie hélicoïdale (30) du ressort (B) du côté de la partie hélicoïdale le plus éloigné de la garniture de friction (12).

10. Indicateur d'usure (C) comportant un conducteur électrique (40) noyé dans un corps (42) comportant une partie de montage (46) pour sa fixation sur une plaque support (10) d'un élément de friction (A) pour frein à disque de véhicule automobile, la plaque support (10) de l'élément de friction (A) étant reçue en ancrage et coulissement dans un organe support de couple (16) du frein à disque, une garniture de friction (12) étant fixée sur une partie de la surface d'une première face de la plaque support (10) pour entrer en contact de friction avec un disque tournant (22) lorsqu'une force est appliquée sur une deuxième face de la plaque support (10) opposée à la première face, une ouverture traversante (24) étant formée dans la plaque support (10) pour la fixation d'une partie hélicoïdale (30) d'un ressort (B) formée d'au moins une spire de fil métallique et de la partie de montage (46) de l'indicateur d'usure (C) de la garniture de friction (12) traversant la partie hélicoïdale (30) du ressort (B), caractérisé en ce que la partie de montage (46) de l'indicateur d'usure est formée avec un filetage (44) coopérant avec la partie hélicoïdale (30) du ressort (B).

## Patentansprüche

1. Baugruppe aus einem Reibungselement (A), einer Feder (B) und einem Verschleißanzeiger (C) für eine Kraftfahrzeugscheibenbremse, wobei das Reibungselement (A) eine Trägerplatte (10) hat, die verschiebbar verankert in einem Bremsmoment-Trägerorgan (16) der Scheibenbremse aufgenommen ist, einen Reibbelag (12), der auf einem Teil der Oberfläche einer ersten Seite der Trägerplatte (10) befestigt ist, um mit einer sich drehenden Scheibe (22) in Reibungskontakt zu kommen, wenn eine Kraft auf eine zweite Seite der Trägerplatte (10) aufgebracht wird, die der ersten Seite entgegengesetzt ist, wobei eine Durchgangsöffnung (24) in der Trägerplatte (10) zur Befestigung eines schraubenförmigen Abschnitts (30) der Feder (B), der aus mindestens einer Spirale aus Draht gebildet ist, und eines Einbauabschnitts (46) des Verschleißanzeigers (C) des Reibbelags (12) ausgebildet ist, der den schraubenförmigen Abschnitt (30) der Feder (B) durchquert, dadurch gekennzeichnet, daß die Feder (B) Endabschnitte (32, 34) hat, die sich auf der einen und auf der anderen Seite der Trägerplatte (10) befinden, wobei der schraubenförmige Abschnitt (30) der Feder (B) in der Öffnung (24) der Trägerplatte (10) aufgenommen ist und der Einbauabschnitt (46) des Verschleißanzeigers (C) mit einem Gewinde ausgebildet ist, das mit dem schraubenförmigen Abschnitt (30) der Feder (B) zusammenwirkt.

2. Baugruppe nach Anspruch 1, dadurch gekennzeichnet, daß der Durchmesser (D) des Einbauabschnitts (46) des Verschleißanzeigers (C) mindestens gleich dem Durchmesser (d) des schraubenförmigen Abschnitts (30) der Feder (B) ist.

3. Baugruppe nach Anspruch 2, dadurch gekennzeichnet, daß sich die Steigung des Gewindes (44) des Einbauabschnitts (46) des Verschleißanzeigers (C) von der Steigung der Spiralen des schraubenförmigen Abschnitts (30) der Feder (B) unterscheidet.

4. Baugruppe nach Anspruch 3, dadurch gekennzeichnet, daß die Steigung des Gewindes des Einbauabschnitts (46) des Verschleißanzeigers (C) kleiner ist als die Steigung der Spiralen des schraubenförmigen Abschnitts (30) der Feder (B).

5. Baugruppe nach Anspruch 3, dadurch gekennzeichnet, daß die Spiralen des schraubenförmigen Abschnitts (30) der Feder (B) im Ruhezustand nebeneinanderliegend sind und daß die Steigung des Gewindes (44) des Einbauabschnitts (46) des Verschleißanzeigers (C) größer als die Steigung der Spiralen des schraubenförmigen Abschnitts (30) der Feder (B) ist.

6. Baugruppe nach einem der Ansprüche 4 oder 5, dadurch gekennzeichnet, daß der schraubenförmige Abschnitt (30) der Feder (B) durch zwei geradlinige Endabschnitte (32) verlängert ist, die sich parallel zu der ersten und der zweiten Fläche der Trägerplatte (10) und in ihrer unmittelbaren Nachbarschaft erstrecken.

7. Baugruppe nach Anspruch 6, dadurch gekennzeichnet, daß die erste Seite der Trägerplatte (10) mindestens einen Anschlag hat, um die Winkelauslenkung des Endabschnitts (32) der Feder (B), der sich in der Nähe dieser ersten Seite befindet, einzuschränken.

8. Baugruppe nach Anspruch 7, dadurch gekennzeichnet, daß die erste Seite der Trägerplatte (10) eine Kehle (50) mit rechtwinkligem Querschnitt und einer Tiefe hat, die an den Durchmesser des Drahtes, der die Feder (B) bildet, angenähert ist, wobei deren Flanken zwei Anschläge bilden, um die Winkelauslenkung des Endabschnitts (32) der Feder (B), die sich in der Nähe dieser ersten Seite befindet, einzuschränken.

9. Baugruppe nach einem der vorhergehenden Abschnitte, dadurch gekennzeichnet, daß die Endabschnitte (32) der Feder (B) den schraubenförmigen Abschnitt (30) der Feder (B) auf der Seite des schraubenförmigen Abschnitts, die vom Reibbelag (12) am weitesten entfernt ist, verlängern.

10. Verschleißanzeiger (C) mit einem elektrischen Leiter (40), der in einen Körper (42) eingebettet ist, der zu seiner Befestigung auf einer Trägerplatte (10) eines Reibungselements (A) für Kraftfahrzeugscheibenbremsen einen Montageabschnitt (46) umfaßt, wobei die Trägerplatte (10) des Reibungselements (A) in einem Bremsmoment-Trägerorgan (16) der Scheibenbremse aufgenommen ist, wobei der Reibbelag (12) auf einem Abschnitt der Oberfläche einer ersten Seite der Trägerplatte (10) befestigt ist, um mit einer sich drehenden Scheibe (22) in Reibungskontakt zu kommen, wenn eine Kraft auf eine zweite Seite der Trägerplatte (10) aufgebracht wird, die der ersten Seite entgegengesetzt ist, wobei eine Durchgangsöffnung (24) in der Trägerplatte (10) zur Befestigung eines schraubenförmigen Abschnitts (30) einer Feder (B), der aus mindestens einer Spirale aus Draht gebildet ist, und eines Einbauabschnitts (46) des Verschleißanzeigers (C) des Reibbelags (12) ausgebildet ist, der den schraubenförmigen Abschnitt (30) der Feder (B) durchquert, dadurch gekennzeichnet, daß der Einbauabschnitt des Verschleißanzeigers mit einem Gewinde (44) ausgebildet ist, das mit dem schraubenförmigen Teil (30) der Feder (B) zusammenwirkt.

## Claims

1. Assembly comprising a friction pad (A), a spring (B) and a wear indicator (C) for a motor vehicle disc brake, the friction pad (A) including a carrier plate (10) received with anchorage and sliding in a torque-withstanding member (16) of the disc brake, a friction lining (12) being fixed to a part of the surface of a first face of the carrier plate (10) to enter into frictional contact with a rotating disc (22) when a force is applied to a second face of the carrier plate (10) opposite the first face, a through-opening (24) being formed in the carrier plate (10) for fixing a helical part (30) of the spring (B), this part being formed of at least one turn of metal wire and of a fitting part (46) of the wear indicator (C) of the friction lining (12) passing through the helical part (30) of the spring (B), characterized in that the spring (B) includes end parts (32, 34) situated on either side of the carrier plate (10), the helical part (30) of the spring (B) being received in the opening (24) of the carrier plate (10), and the fitting part (46) of the wear indicator (C) being formed with a screw thread interacting with the helical part (30) of the spring (B).

2. Assembly according to Claim 1, characterized in that the diameter (D) of the fitting part (46) of the wear indicator (C) is at least equal to the diameter (d) of the helical part (30) of the spring (B).

3. Assembly according to Claim 2, characterized in that the pitch of the screw thread (44) of the fitting part (46) of the wear indicator (C) is different from the pitch of the turns of the helical part (30) of the spring (B).

4. Assembly according to Claim 3, characterized in that the pitch of the screw thread of the fitting part (46) of the wear indicator (C) is less than the pitch of the turns of the helical part (30) of the spring (B).

5. Assembly according to Claim 3, characterized in that the turns of the helical part (30) of the spring (B) are contiguous at rest, and in that the pitch of the screw thread (44) of the fitting part (46) of the wear indicator (C) is greater than the pitch of the turns of the helical part (30) of the spring (B).

6. Assembly according to either one of Claims 4 and 5, characterized in that the helical part (30) of the spring (B) is extended by two straight end parts (32) extending parallel to the first and second faces of the carrier plate (10) and in their immediate vicinity.

7. Assembly according to Claim 6, characterized in that the first face of the carrier plate (10) includes at least one limit stop for limiting the angular excursion of the end part (32) of the spring (B), which part is situated in the vicinity of this first face.

8. Assembly according to Claim 7, characterized in that the first face of the carrier plate (10) includes a groove (50) with rectangular cross section and with a depth similar to the diameter of the metal wire forming the spring (B), and the flanks of which form two limit stops for limiting the angular excursion of the end part (32) of the spring (B), which part is situated in the vicinity of this first face.

9. Assembly according to one of the preceding claims, characterized in that the end parts (32) of the spring (B) extend the helical part (30) of the spring (B) on the same side as the helical part furthest away from the friction lining (12).

10. Wear indicator (C) including an electric conductor (40) embedded in a body (42) including a fitting part (46) for fixing it to a carrier plate (10) of a friction pad (A) for a motor vehicle disc brake, the carrier plate (10) of the friction pad (A) being received with anchorage and sliding in a torque-withstanding member (16) of the disc brake, a friction lining (12) being fixed to a part of the surface of a first face of the carrier plate (10) to enter into frictional contact with a rotating disc (22) when a force is applied to a second face of the carrier plate (10) opposite the first face, a through-opening (24) being formed in the carrier plate (10) for fixing a helical part (30) of a spring (B), this part being formed of at least one turn of metal wire and of a fitting part (46) of the wear indicator (C) of the friction linings (12) passing through the helical part (30) of the spring (B), characterized in that the fitting part (46) of the wear indicator is formed with a screw thread (44) interacting with the helical part (30) of the spring (B).
